# EUROPEAN PATENT SPECIFICATION

(11) **EP 3 378 694 B1**
(45) Date of publication and mention of the grant of the patent: **14.08.2019**
(21) Application number: 17162669.0
(22) Date of filing: 23.03.2017
(51) Int. Cl.: B60L 50/50, G01G 7/00, G01L 5/10

(54) **APPARATUS AND METHOD FOR PROVIDING A MEASURE OF CURRENT CAPACITY**
VORRICHTUNG UND VERFAHREN ZUR BEREITSTELLUNG EINER MESSUNG EINER LEISTUNGSKAPAZITÄT
APPAREIL ET PROCÉDÉ POUR FOURNIR UNE MESURE DE LA CAPACITÉ DE COURANT

(43) Date of publication of application: 26.09.2018
(73) Proprietor: Vestel Elektronik Sanayi ve Ticaret A.S., 45030 Manisa (TR)
(72) Inventor: TUNAY, Erkan, 45030 Manisa (TR); ÖZKÜÇÜK, Serhat, 45030 Manisa (TR); ÖZEN, Erol, 45030 Manisa (TR)
(74) Representative: Whitfield, Ian

(56) References cited:
- WO-A1-2013/113400
- CN-A- 102 331 355
- US-A1- 2011 066 394
- US-A1- 2013 313 918

## Description

### Technical Field

The present disclosure relates to a method and apparatus for providing a measure of the current capacity of a charging cable.

### Background

Electric and hybrid electric vehicles, such as automobiles, etc., are vehicles that are propelled by electrical energy which is typically stored in a rechargeable battery contained within the vehicle. Such batteries may be recharged by connecting the battery to a battery charging apparatus.

In a battery charging operation, the vehicle must be connected to the battery charging apparatus by use of a charging cable. For safety and efficiency purposes, the current flowing through the charging cable must be controlled to prevent overly high current flow.

### Summary

According to a first aspect disclosed herein, there is provided apparatus for providing a measure of the current capacity of a charging cable, the apparatus comprising: a measuring device constructed and arranged to measure the weight of a section of a charging cable; and a controller configured to provide a measure of the current capacity of the charging cable based on the measured weight of the section of the charging cable.

This allows for determination of the current capacity of a charging cable based on the measured weight of a known length of a section of the charging cable. The determined charging capacity of the charging cable may then be used, for example, by a battery charging apparatus to safely charge a battery in an electric vehicle using the charging cable. As such, the apparatus enables safe and efficient use of a charging cable in a manner that is convenient for the user.

In an example, the measuring device is a strain gauge.

In an example, the controller is configured to provide the measure of the current capacity of the charging cable by searching a look-up table which contains data for weight and corresponding current capacity for a plurality of charging cables having different weights and current capacity. In this way, use of a look-up table provides for reduced processing burden on the controller whilst still allowing estimation of the current capacity of a charging cable.

In an example, the apparatus comprises data storage which stores the look-up table.

In an example, the controller is configured to provide the measure of the current capacity of the charging cable by estimating the current capacity of the charging cable in real-time using the measured weight of the section of the charging cable. In this way, use of real-time calculation provides for a very accurate estimation of the current capacity of a charging cable.

In an example, the controller is operable to receive a user input value for the length of the section of the charging cable. In this way, use of a user input value for the length reduces the processing burden on the controller when estimating the current capacity of a charging cable.

In an example, the apparatus comprises a sensor arranged to provide a measure of the length of the section of the charging cable. In this way, such a sensor ensures that the apparatus very accurately estimates the length of a section of a charging cable, which results in a very accurate estimation of the current capacity of a charging cable.

There may also be provided a battery charging apparatus, the battery charging apparatus comprising: measuring apparatus as described above; a socket for receiving a plug of a charging cable; and a charge delivery device for delivering a current to a received charging cable in accordance with the measured current capacity of the charging cable.

Providing a measure of the charging capacity of a charging cable in this manner allows for the battery charging apparatus to safely and efficiently charge a battery of, for example, an electric vehicle. The user is not restricted to using a limited number of different types of charging cables. Furthermore, a charging cable can still be used even if it has degraded through use or if it was manufactured with a different charging capacity from that which is nominally indicated, because the measuring apparatus will always determine a safe and efficient charging capacity before using a charging cable.

In an example, the battery charging apparatus comprises a charging controller configured to control the charge delivery device to deliver a current to a received charging cable according to the current capacity of the charging cable determined by the measuring apparatus.

In an example, the measuring device is a strain gauge which is positioned adjacent the socket so as to be loaded when the plug of a charging cable is received in the socket.

According to a second aspect disclosed herein, there is provided a method of recharging a battery, the method comprising: measuring the weight of at least a section of a charging cable which is connected to a battery charging apparatus; obtaining a measure of the current capacity of the charging cable based on the measured weight; and charging the battery in accordance with the measured current capacity of the charging cable.

In an example, the weight of at least a section of the charging cable is measured using a strain gauge.

In an example, the measure of the current capacity of the charging cable is obtained by searching a look-up table which contains data for weight and corresponding current capacity for a plurality of charging cables having different weights and current capacity.

In an example, the measure of the current capacity of the charging cable is obtained by estimating the current capacity of the charging cable in real-time using the measured weight of the section of the charging cable.

In an example, the method comprises receiving as an input a value for the length of the section of the charging cable.

### Brief Description of the Drawings

To assist understanding of the present disclosure and to show how embodiments may be put into effect, reference is made by way of example to the accompanying drawings in which:
Figure 1 shows schematically an example of a battery charging apparatus connected to an electric vehicle by a charging cable; and
Figure 2 shows a flow diagram illustrating an example of the process of recharging a battery of an electric vehicle using the battery charging apparatus shown in Figure 1.

### Detailed Description

Electric and hybrid electric vehicles, such as automobiles, etc., include a rechargeable battery for storing electrical energy to be used for propulsion. The battery may be recharged by connecting it to a battery charging apparatus. To recharge the battery, the vehicle must be connected to the battery charging apparatus by use of a charging cable. For safety and efficiency purposes, the current flowing through the charging cable must be controlled to prevent overly high current flow.

Different batteries have different charging current capacities, that is, the permitted or recommended or "safe" level of charging current that can be used to charge the battery. For example, typical battery charging current capacities are 13A, 20A, 32A and 63A. In turn, different charging cables exist, which are compatible with the different batteries. Each different type of charging cable has a different maximum current flow through the cable that is regarded as safe. It is therefore important that a battery charging apparatus can determine the type of charging cable that has been connected to it before beginning to charge the connected battery of the vehicle so that it knows the maximum safe current flow (i.e. the current capacity).

In the prior art, charging cables are produced with a particular resistance, which corresponds with a particular current capacity. For example, according to certain standards, a 13A current capacity charging cable is produced with 1.5kΩ resistance, a 20A current capacity charging cable is produced with 680 Ω resistance, a 32A current capacity charging cable is produced with 220 Ω resistance, and a 63A current capacity charging cable is produced with 100 Ω resistance. When a charging cable is initially connected to a battery charging apparatus, the battery charging apparatus senses the resistance provided by the charging cable. The battery charging apparatus then uses the sensed resistance to identify the type of charging cable connected to it. This process attempts to ensure that the battery charging apparatus does not send an overly high current through the charging cable.

The use of this known method of determining the type of charging cable connected to a battery charging apparatus is problematic. First, it restricts users to using only these four different types of charging cables since charging cables providing alternative resistances are not recognised by known battery charging apparatus. Secondly, if the resistance provided by a charging cable degrades through use, or if a charging cable is manufactured with a resistance that does not correspond to one of the above values (e.g. due to defective manufacturing or excessive manufacturing tolerances), the battery charging apparatus cannot identify the type of charging cable connected to it and thus the battery charging operation cannot begin. This is frustrating and potentially dangerous for a user, particularly if the user is in a remote location and the degraded charging cable is the only charging cable available to the user. Thirdly, if a charging cable is manufactured with a resistance that corresponds to a different type of charging cable then there is a risk of serious injury because the battery charging apparatus may attempt to send a current through the charging cable that is too high for the charging cable to handle.

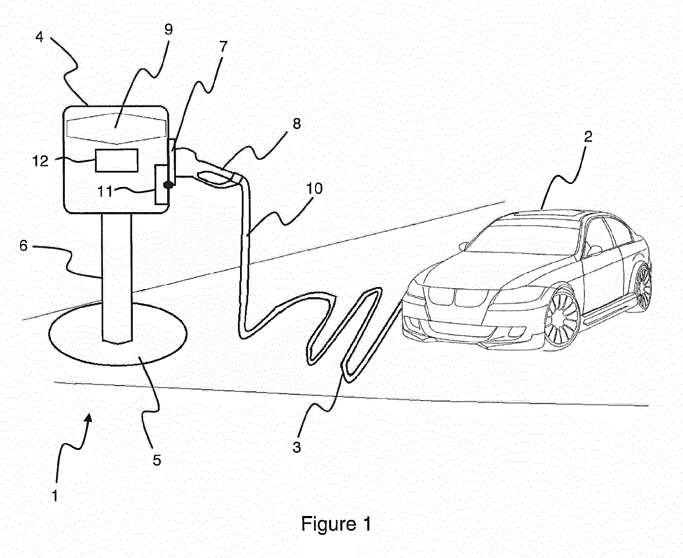

Referring now to Figure 1, there is shown an example of a battery charging apparatus 1 connected to an electric vehicle 2 by a charging cable 3.

The electric vehicle 2 includes a rechargeable battery (not shown) for supplying electrical energy to propel the vehicle. The vehicle may be any type of vehicle that is capable of being propelled at least temporarily by electrical energy stored in a rechargeable battery, including for example a hybrid electric vehicle.

The battery charging apparatus 1 has a housing 4 elevated above a base plate 5 by a rigid support 6. The battery charging apparatus 1 also has a socket 7 arranged to receive a corresponding plug (not shown) of the charging cable 3 so as to connect the charging cable 3 to the battery charging apparatus 1.

The socket 7 is connected to a source of electricity, such as mains electricity, by a connector (not shown). A charge delivery device (not shown) is provided for delivering a current to the charging cable 3 when it is connected to the battery charging apparatus 1, in a process that is described below.

The charging cable 3 is typically a length of copper wire or wires encased in a sheath. The charging cable 3 has a first plug (not shown) at a first end. The first plug is arranged to cooperate and mate with the socket 7. The charging cable 3 also has a second plug (not shown) at an opposite end to the first plug. The second plug is arranged to cooperate and mate with a socket (not shown) provided on the electric vehicle 2 so that the battery charging apparatus 1 is connectable to the electric vehicle 2. The charging cable 3 also includes a handle 8 to assist a user in inserting the first plug into the socket 7.

A main controller 9, such as a microcontroller, is provided within the housing 4 of the battery charging apparatus 1 for controlling the operation of the battery charging apparatus 1. For example, the main controller 9 controls measurement of the current capacity of a charging cable connected to the battery charging apparatus 1. The main controller 9 is connected to data storage provided in the housing 4 and which will be discussed further below.

The battery charging apparatus 1 also includes a measuring apparatus for providing a measure of the current capacity of a charging cable connected to the battery charging apparatus.

The measuring apparatus has a measuring device that can measure the weight of a section 10 of the charging cable 3. In this example, the measuring device is a strain gauge 11. In other examples, other measuring devices may be used to measure the weight of the section 10 of the charging cable 3.

Strain gauges are known devices used to measure strain on an object. A common type of strain gauge has an insulating flexible backing which supports a spring element, such as a pattern of metallic foil. The strain gauge is attached to an object by a suitable adhesive. As the object is deformed, the metallic foil is deformed, causing its electrical resistance to change. This small change in resistance, usually measured using a Wheatstone bridge, is related to the strain. It is also well known that the weight of an object acting on a strain gauge can be determined based on the measured strain. Other types of strain gauges are known, including, for example, piezoelectric or semiconductor strain gauges and wire strain gauges.

In the example illustrated in Figure 1, the strain gauge 11 is attached to or associated with a part of the socket 7 of the battery charging apparatus 1 so that the strain gauge 11 is loaded with strain from the weight of the charging cable 3 when the first plug of the charging cable 3 is inserted into the socket 7. In the example strain gauge 11 that has a metallic foil as described above, this strain causes the metallic foil of the strain gauge 11 to deform and thus causes the electrical resistance of the metallic foil to change. The change in electrical resistance is measurable and can be collected as strain gauge data 20 by the main controller 9.

In some examples, the strain gauge 11 is provided at a surface of the housing 4 that is adjacent a lower surface or edge of the socket 7. This exposed position allows for optimal measurement of the strain exerted by the weight of the section 10 of the charging cable 3, and thus optimal measurement of the weight of the section 10 of the charging cable 3.

The battery charging apparatus 1 in this example is manufactured and installed so that the height of the strain gauge 11 adjacent the socket 7 (i.e. the distance between the strain gauge 11 and the ground on which the battery charging apparatus 1 is to be placed) is determinable or is predetermined. This height can be determined or predetermined by, for example, knowing or specifying the height of the support 6, the thickness of the base plate 5, the position of the socket 7 relative to the housing 4, and the position of the strain gauge 11 relative to the socket 7. The height of the strain gauge 11 (height data 21) may be set manually by the manufacturer or user and stored in the data storage of the battery charging apparatus 1. In other embodiments, a height sensor, such as a laser height sensor, may be provided in or on the housing 4 for measuring the height of the strain gauge 11. The height data 21 is approximately equal to the length of a section 10 of the charging cable 3 that extends from the first plug of the charging cable 3 to the ground when the first plug and thus the charging cable 3 is connected to the socket 7 of the battery charging apparatus 1. The height data 21 allows for the main controller 9 to determine the weight per unit length of the section 10 of the charging cable 3, as discussed further below.

The main controller 9 is configured to calculate the weight of the known length of the section 10 of the charging cable 3 by using the strain gauge data 20 collected from the strain gauge 11. The main controller 9 is also configured to provide a measure of the current capacity of the charging cable 3 based on the calculated weight of the section 10 of the charging cable 3 obtained from the strain gauge data 20. The process of providing a measure of the current capacity of the charging cable 3 is described below.

A charging controller 12 is also provided in the battery charging apparatus 1. The charging controller 12 is configured to control the charge delivery device to deliver a current to the charging cable 3 according to the current capacity of the charging cable 3 determined by the main controller 9.

In use, when a user wishes to recharge the battery of the electric vehicle 2, the user drives the vehicle 2 to the battery charging apparatus 1, removes the charging cable 3 from the vehicle 2 and connects the first plug of the charging cable 3 to the socket 7 of the battery charging apparatus 1.

The user then activates the battery charging apparatus 1 by, for example, actuating a "start" button provided on the battery charging apparatus 1 or by swiping a payment card on a suitable payment card sensor provided on the battery charging apparatus 1. In other embodiments, the battery charging apparatus 1 activates automatically when the charging cable 3 is connected to the socket 7.

When the battery charging apparatus 1 has been activated, for safety and efficiency purposes as discussed above, the current capacity of the charging cable 3 is determined before a charging operation can begin.

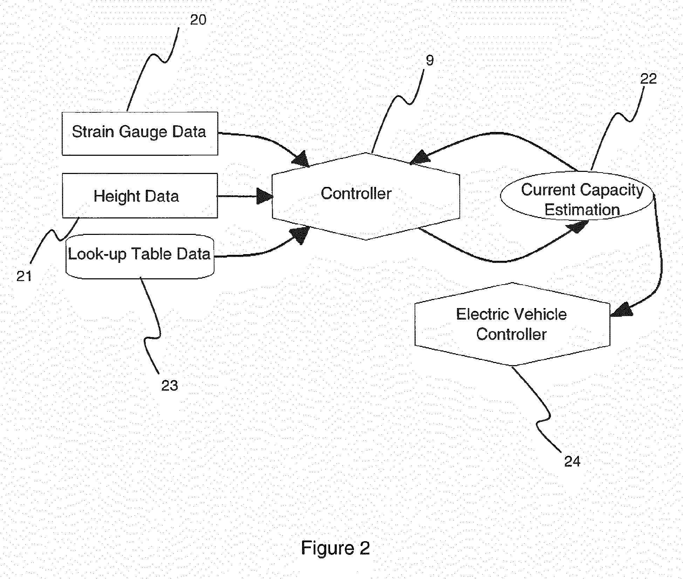

To this end, referring now particularly to Figure 2, the main controller 9 retrieves strain gauge data 20 from the strain gauge 11, which determines strain on the strain gauge 11 caused by the weight of the section 10 of the charging cable 3 extending from the first plug connected to the socket 7. The strain gauge data 20 is a function of the weight of the section 10 of the charging cable 3 that extends from the socket 7 to the ground.

The main controller 9 then retrieves the height data 21 from its data storage. In other embodiments, the main controller 9 may retrieve the height data 21 from a height sensor provided in the housing 4 or the height data 21 as manually input by the user. As discussed above, the height data 21 corresponds to the length of the section 10 of the charging cable 3 which extends from the socket 7 of the battery charging apparatus 1 to the ground.

The main controller 9 then uses the strain gauge data 20 to calculate the weight of the section 10 of the charging cable 3. In an alternative, the strain gauge data 20 which is output by the strain gauge 11 itself represents the weight of the section 10 of the charging cable 3.

Then, using the weight of the section 10 of the charging cable 3 and knowing the length of the section 10 (as provided by the height of the strain gauge 11/charging socket 7), the main controller 9 then obtains a measure of the current capacity 22 of the charging cable 3. In one example, this is achieved by searching in look-up data 23 contained in a look-up table stored in the data storage of the battery charging apparatus 1. The look-up data 23 contains data on weight per unit length and corresponding current capacity for a plurality of charging cables having different weights per unit length and current capacity. The main controller 9 is configured to search for an example charging cable having the same or a similar weight per unit length.

Table 1 shows an example of the first few entries of look-up data 23 contained in a look-up table stored in the data storage of the main controller 9.

**Table 1**

| Charging Cable Current Capacity in Amps *A* | Charging Cable Weight in grams *g* per 10cm | Strain Gauge (Resistance/Weight Ω/*g*) |
|---|---|---|
| 1 | 5 | 50 |
| 2 | 12 | 60 |
| 3 | 18 | 70 |
| 4 | 25 | 80 |
| ... | ... | ... |

In an alternative, instead of using a look-up table, the controller 9 may provide the measure of the current capacity of the charging cable 3 by estimating the current capacity of the charging cable in real-time using the measured weight of the section 10 of the charging cable 3 following an appropriate algorithm.

Once the main controller 9 has obtained a measure of the current capacity of the particular charging cable 3, the battery charging apparatus 1 prompts the user to connect the second plug of the charging cable 3 to the corresponding socket provided on the electric vehicle 9. The user may be prompted by, for example, a visual or audible indicator.

When the second plug of the charging cable 3 has been connected to the corresponding socket of the electric vehicle 2, the main controller 9 of the battery charging apparatus 1 sends the obtained measure of the current capacity of the charging cable 3 to a corresponding controller 24 in the electric vehicle 2. The charging controller 12 of the battery charging apparatus 1 and the controller 24 in the electric vehicle 2 cooperate so that the charge delivery device of the battery charging apparatus 1 then delivers a current through the charging cable 3 to the battery system of the electric vehicle 2 according to the determined current capacity of the charging cable 3. The battery system of the electric vehicle 2 then begins to be recharged.

Accordingly, in examples, a user is safely allowed to recharge the battery of the electric vehicle 2 using any type of charging cable 3. The user is thus not restricted to using only the four standard types of charging cable 3 described above. Furthermore, if a charging cable 3 has degraded through use, it can still be used to charge the electric vehicle 2 since the apparatus and method will determine a new suitable and safe current capacity. Moreover, the above mentioned safety concerns are mitigated because if the charging cable 3 is defective and/or manufactured with a different current capacity to which the charging cable 3 indicates, the apparatus and method will determine the correct current capacity and allow safe and efficient recharging of the battery of the electric vehicle 2.

Reference is made herein to data storage for storing data. This may be provided by a single device or by plural devices. Suitable devices include for example a hard disk and non-volatile semiconductor memory. Similarly, reference is made herein to one or more controllers. The controllers in for example the battery charging apparatus 1 may be provided by a single device or by plural devices, such as one or more processors or processing systems or circuitry. Moreover, the exemplary embodiments may be implemented at least in part by computer software stored in (non-transitory) memory and executable by the processor, or by hardware, or by a combination of tangibly stored software and hardware (and tangibly stored firmware).

The example described herein is to be understood as an illustrative example of an embodiment of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. Apparatus for providing a measure of the current capacity of a charging cable, the apparatus comprising:
a measuring device constructed and arranged to measure the weight of a section of a charging cable; and
a controller configured to provide a measure of the current capacity of the charging cable based on the measured weight of the section of the charging cable.

2. Apparatus according to claim 1, wherein the measuring device is a strain gauge.

3. Apparatus according to claim 1 or claim 2, wherein the controller is configured to provide the measure of the current capacity of the charging cable by searching a look-up table which contains data for weight and corresponding current capacity for a plurality of charging cables having different weights and current capacity.

4. Apparatus according to claim 3, comprising data storage which stores the look-up table.

5. Apparatus according to any of claims 1 to 4, wherein the controller is configured to provide the measure of the current capacity of the charging cable by estimating the current capacity of the charging cable in real-time using the measured weight of the section of the charging cable.

6. Apparatus according to any of claims 1 to 5, wherein the controller is operable to receive a user input value for the length of the section of the charging cable.

7. Apparatus according to any of claims 1 to 6, comprising a sensor arranged to provide a measure of the length of the section of the charging cable.

8. A battery charging apparatus, the battery charging apparatus comprising:
measuring apparatus according to any one of claims 1 to 7;
a socket for receiving a plug of a charging cable; and
a charge delivery device for delivering a current to a received charging cable in accordance with the measured current capacity of the charging cable.

9. A battery charging apparatus according to claim 8, comprising a charging controller configured to control the charge delivery device to deliver a current to a received charging cable according to the current capacity of the charging cable determined by the measuring apparatus.

10. A battery charging apparatus according to claim 8 or claim 9, wherein the measuring device is a strain gauge which is positioned adjacent the socket so as to be loaded when the plug of a charging cable is received in the socket.

11. A method of recharging a battery, the method comprising:
measuring the weight of at least a section of a charging cable which is connected to a battery charging apparatus;
obtaining a measure of the current capacity of the charging cable based on the measured weight; and
charging the battery in accordance with the measured current capacity of the charging cable.

12. A method of recharging a battery according to claim 11, wherein the weight of at least a section of the charging cable is measured using a strain gauge.

13. A method of recharging a battery according to claim 11 or claim 12, wherein the measure of the current capacity of the charging cable is obtained by searching a look-up table which contains data for weight and corresponding current capacity for a plurality of charging cables having different weights and current capacity.

14. A method of recharging a battery according to any of claims 11 to 13, wherein the measure of the current capacity of the charging cable is obtained by estimating the current capacity of the charging cable in real-time using the measured weight of the section of the charging cable.

15. A method of recharging a battery according to any of claims 11 to 14, comprising receiving as an input a value for the length of the section of the charging cable.

## Patentansprüche

1. Vorrichtung zum Bereitstellen eines Messwerts der Stromkapazität eines Ladekabels, wobei die Vorrichtung Folgendes umfasst:
ein Messgerät, konstruiert und ausgelegt zum Messen des Gewichts eines Abschnitts eines Ladekabels; und
eine Steuerung, konfiguriert zum Bereitstellen eines Messwerts der Stromkapazität des Ladekabels auf der Basis des gemessenen Gewichts des Abschnitts des Ladekabels.

2. Vorrichtung nach Anspruch 1, wobei das Messgerät ein Dehnungsmessstreifen ist.

3. Vorrichtung nach Anspruch 1 oder Anspruch 2, wobei die Steuerung zum Bereitstellen des Messwertes der Stromkapazität des Ladekabels durch Durchsuchen einer Nachschlagtabelle beinhaltet, die Daten für Gewicht und entsprechende Stromkapazität für mehrere Ladekabel mit unterschiedlichen Gewichten und Stromkapazitäten enthält.

4. Vorrichtung nach Anspruch 3, die einen Datenspeicher umfasst, der die Nachschlagtabelle speichert.

5. Vorrichtung nach einem der Ansprüche 1 bis 4, wobei die Steuerung zum Bereitstellen des Messwertes der Stromkapazität des Ladekabels durch Schätzen der Stromkapazität des Ladekabels in Echtzeit anhand des gemessenen Gewichts des Abschnitts des Ladekabels konfiguriert ist.

6. Vorrichtung nach einem der Ansprüche 1 bis 5, wobei die Steuerung die Aufgabe hat, einen Benutzereingabewert für die Länge des Abschnitts des Ladekabels zu empfangen.

7. Vorrichtung nach einem der Ansprüche 1 bis 6, die einen Sensor umfasst, ausgelegt zum Bereitstellen eines Messwerts der Länge des Abschnitts des Ladekabels.

8. Batterieladevorrichtung, wobei die Batterieladevorrichtung Folgendes umfasst:
eine Messvorrichtung nach einem der Ansprüche 1 bis 7;
eine Buchse zum Aufnehmen eines Steckers eines Ladekabels; und
eine Ladungsabgabevorrichtung zum Abgeben eines Stroms an ein aufgenommenes Ladekabel gemäß der gemessenen Stromkapazität des Ladekabels.

9. Batterieladevorrichtung nach Anspruch 8, die eine Ladesteuerung umfasst, konfiguriert zum Steuern der Ladungsabgabevorrichtung zum Abgeben eines Stroms an ein aufgenommenes Ladekabel gemäß der Stromkapazität des Ladekabels wie von der Messvorrichtung festgestellt.

10. Batterieladevorrichtung nach Anspruch 8 oder Anspruch 9, wobei das Messgerät ein Dehnungsmessstreifen ist, der neben der Buchse positioniert ist, um geladen zu werden, wenn der Stecker eines Ladekabels in die Buchse eingesteckt ist.

11. Verfahren zum Aufladen einer Batterie, wobei das Verfahren Folgendes beinhaltet:
Messen des Gewichts von wenigstens einem Abschnitt eines Ladekabels, das mit einer Batterieladevorrichtung verbunden ist;
Einholen eines Messwertes der Stromkapazität des Ladekabels auf der Basis des gemessenen Gewichts; und
Laden der Batterie gemäß der gemessenen Stromkapazität des Ladekabels.

12. Verfahren zum Aufladen einer Batterie nach Anspruch 11, wobei das Gewicht von wenigstens einem Abschnitt des Ladekabels mit einem Dehnungsmessstreifen gemessen wird.

13. Verfahren zum Aufladen einer Batterie nach Anspruch 11 oder Anspruch 12, wobei der Messwert der Stromkapazität des Ladekabels durch Durchsuchen einer Nachschlagtabelle eingeholt wird, die Daten für Gewicht und entsprechende Stromkapazität für mehrere Ladekabel mit unterschiedlichen Gewichten und Stromkapazitäten enthält.

14. Verfahren zum Aufladen einer Batterie nach einem der Ansprüche 11 bis 13, wobei der Messwert der Stromkapazität des Ladekabels durch Schätzen der Stromkapazität des Ladekabels in Echtzeit anhand des gemessenen Gewichts des Abschnitts des Ladekabels eingeholt wird.

15. Verfahren zum Aufladen einer Batterie nach einem der Ansprüche 11 bis 14, das das Empfangen eines Wertes für die Länge des Abschnitts des Ladekabels als Eingabe beinhaltet.

## Revendications

1. Appareil pour fournir une mesure de la capacité de courant d'un câble de chargement, l'appareil comprenant :
un instrument de mesure construit et agencé pour mesurer le poids d'une section d'un câble de chargement ; et
un contrôleur configuré pour fournir une mesure de la capacité de courant du câble de chargement sur la base du poids mesuré de la section du câble de chargement.

2. Appareil selon la revendication 1, dans lequel l'instrument de mesure est une jauge de contrainte.

3. Appareil selon, soit la revendication 1, soit la revendication 2, dans lequel le contrôleur est configuré pour fournir la mesure de la capacité de courant du câble de chargement en se référant à une table de consultation qui contient des données sur le poids et la capacité de courant correspondante pour une pluralité de câbles de chargement dont les poids et la capacité de courant sont différents.

4. Appareil selon la revendication 3, comprenant un stockage de données qui stocke la table de consultation.

5. Appareil selon l'une quelconque des revendications 1 à 4, dans lequel le contrôleur est configuré pour fournir une mesure de la capacité de courant du câble de chargement en estimant la capacité de courant du câble de chargement en temps réel, en utilisant le poids mesuré de la section du câble de chargement.

6. Appareil selon l'une quelconque des revendications 1 à 5, dans lequel le contrôleur est capable de recevoir une valeur d'entrée d'utilisateur correspondant à la longueur de la section du câble de chargement.

7. Appareil selon l'une quelconque des revendications 1 à 6, comprenant un capteur agencé pour fournir une mesure de la longueur de la section du câble de chargement.

8. Chargeur de batterie, le chargeur de batterie comprenant :
un instrument de mesure selon l'une quelconque des revendications 1 à 7 ;
une prise pour recevoir une fiche d'un câble de chargement ; et
un dispositif d'injection de charge pour injecter un courant dans un câble de chargement reçu conformément à la capacité de courant mesurée du câble de chargement.

9. Chargeur de batterie selon la revendication 8, comprenant un contrôleur de chargement configuré pour contrôler le dispositif d'injection de charge, pour injecter un courant dans un câble de chargement reçu conformément à la capacité de courant du câble de chargement que détermine l'appareil de mesure.

10. Chargeur de batterie selon, soit la revendication 8, soit la revendication 9, dans lequel l'instrument de mesure est une jauge de contrainte qui est positionnée à proximité de la prise de sorte à pouvoir être chargé lorsque la fiche d'un câble de chargement est enfichée dans la prise.

11. Procédé de rechargement d'une batterie, le procédé consistant à :
mesurer le poids d'au moins une section d'un câble de chargement qui est connecté à un chargeur ;
obtenir une mesure de la capacité de courant du câble de chargement sur la base du poids mesuré ; et
charger la batterie conformément à la capacité de courant mesurée du câble de chargement.

12. Procédé pour recharger une batterie selon la revendication 11, dans lequel le poids d'au moins une section du câble de chargement est mesurée à l'aide d'une jauge de contrainte.

13. Procédé pour recharger une batterie selon, soit la revendication 11, soit la revendication 12, dans lequel la mesure de la capacité de courant du câble de chargement est obtenue en se référant à une table de consultation qui contient des données sur le poids et la capacité de courant correspondante pour une pluralité de câbles de chargement dont les poids et la capacité de courant sont différents.

14. Procédé pour recharger une batterie selon l'une quelconque des revendications 11 à 13, dans lequel la mesure de la capacité de courant du câble de chargement est obtenue en estimant la capacité de courant du câble de chargement en tems réel, en utilisant le poids mesuré de la section du câble de chargement.

15. Procédé pour recharger une batterie selon l'une quelconque des revendications 11 à 14, consistant à recevoir en tant qu'entrée une valeur correspondant à la longueur de la section du câble de chargement.
